# EUROPEAN PATENT SPECIFICATION

(11) **EP 1 925 165 B1**
(45) Date of publication and mention of the grant of the patent: **07.11.2018**
(21) Application number: 06802886.9
(22) Date of filing: 01.09.2006
(51) Int. Cl.: H04N 19/513, H04N 19/567, H04N 19/46

(54) **MOTION VECTOR SELECTION**
BEWEGUNGSVEKTORAUSWAHL
SELECTION DE VECTEUR DE MOUVEMENT

(30) Priority: 16.09.2005 US 228919
(43) Date of publication of application: 28.05.2008
(73) Proprietor: Sony Electronics, Inc., Park Ridge, NJ 07675 (US)
(72) Inventor: CARRIG, James, J., San Jose, CA 95125 (US); PANICONI, Marco, Campbell, CA 95008 (US); MIAO, Zhourong, San Jose, CA 95134 (US)
(74) Representative: D Young & Co LLP
(86) International application number: PCT/US2006/034403
(87) International publication number: WO 2007/035238

(56) References cited:
- US-A- 5 818 536
- US-A- 5 872 599
- US-A1- 2003 118 101
- US-A1- 2005 135 483

## Description

### FIELD OF THE INVENTION

The invention is related to the field of video compression.

### BACKGROUND OF THE INVENTION

Motion vectors are commonly used in image coding to facilitate the approximation of a target image (which may be a frame, a field, or a portion thereof) with respect to one or more reference images. This approximated target image is called the compensated image. The approximation procedure tiles the target image into fixed size blocks and assigns a motion vector to each block so as to map each block in the target image to a closely matching block on a reference image. The values for pixels in a particular block of the target image are then copied from the mapped block on the reference image. Common variations to this approximation process include adding prediction modes, taking the average of two same-sized and positioned blocks, and splitting a tile into smaller areas.

The error between the desired target image and the compensated image is then encoded. It is assumed that both the encoder and decoder have access to the same reference images. Therefore, only the motion vectors and residual error corrections are used to accomplish video coding for transformation.

A successful video coder balances many factors to generate a high-quality target image while using limited computational resources. Of all these factors, the selection of a set of motion vectors to map to reference blocks is critical to video quality and costly in terms of computational resources. Conventional video coders are unable to select a set of globally optimal motion vectors, given the limited computational resources that are available.

Therefore, there is a need for a method of selecting a set of globally optimal, or nearly globally optimal, motion vectors for predicting a target image using limited and interruptible computational resources.

US 5,872,599 describes a method for generating an output signal representing a selectively reduced coding rate for use in compressing a digital signal. The digital signal includes a plurality of digital sets wherein at least one of the digital sets are non-unique. A current coding rate and a threshold coding rate are compared to determine whether the current coding rate satisfies a predetermined criteria, then at least one of the digital sets is selectively discarded, a resulting rate difference is determined, and the current coding rate is recalculated using the determined rate difference.

US 2003/118101 describes a method for image compression using block size heuristics. Motion searching a video frame includes iteratively decreasing block size until a rate-distortion is minimized.

### SUMMARY

Aspects and embodiments of the invention are set out in the appended claims.

### BRIEF DESCRIPTION OF THE DRAWINGS

The present invention is illustrated by way of example and may be better understood by referring to the following description in conjunction with the accompanying drawings, in which:
**Figure 1** shows an example of a device for performing the motion vector selection method.
**Figure 2** shows a set of examples of shape definitions which are used in some embodiments of the shape definition library 140 shown in **Figure 1****.**
**Figure 3** shows another set of examples of shape definitions which are used in some embodiments of the shape definition library 140 shown in **Figure 1****.**
**Figure 4** shows an example of a target block that is mapped to a reference block in a reference image using a motion vector from the output selection of motion vectors.
**Figure 5** shows an example of pixels in the target image that are mapped to multiple reference blocks.
**Figure 6** shows an example of a motion vector selection method.
**Figure 7** is a graph of the reduction in distortion of the target image resulting from multiple iterations of the method if **Figure 6****.**
**Figure 8** shows the relative change on the rate and distortion resulting from adding or removing particular motion vectors using the method of **Figure 6****.**
**Figure 9** is a table showing the effects of adding or removing a motion vector from the selection of motion vectors.
**Figure 10** shows the relative change on the rate and distortion resulting from adding or removing one or more motion vectors.
**Figure 11** is a table showing the effects of adding or removing one or more motion vectors.
**Figure 12** shows an example of a method for adding a motion vector used by the method of **Figure 6****.**
**Figure 13** shows an example of a method of removing a motion vector used by the method of **Figure 6****.**
**Figure 14** shows an example of a method for encoding an image of video data using the method of **Figure 6****.**
**Figure 15** shows an example of a method of decoding the image.
**Figure 16** shows an example of a video system that uses the motion vector selection method.

### DETAILED DESCRIPTION

In the following description, reference is made to the accompanying drawings which form a part hereof, and in which is shown by way of illustration a specific embodiment in which the invention may be practiced. It is to be understood that other embodiments may be utilized and structural changes may be made without departing from the scope of the present invention. For example, skilled artisans will understand that the terms field or frame or image that are used to describe the various embodiments are generally interchangeable as used with reference to video data.

A motion vector selection method modifies an existing initial selection of motion vectors to derive an improved representation of the target image at a designated bit rate. In some embodiments, the method may be initialized close to a solution, the rate control can be modified at any time, and the method may be interrupted at any time, making it highly suitable as a component for real-time video coding.

The method finds a nearly optimal selection by using limited, interruptible, resources. This task is accomplished by starting with an initial selection of spatio-temporal reference images and then quickly modifying that selection to form a feasible selection. The method then continues to improve this selection until the operation either converges or reaches one or more other stopping criteria. Each modified selection creates a rate-distortion improvement to approximately optimize the selection of motion vectors for the given rate.

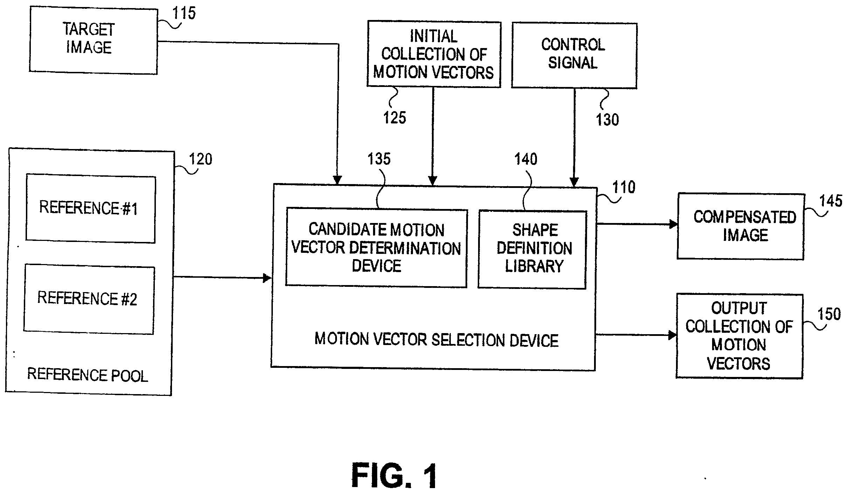

An example of a device for performing the motion vector selection method is shown in **Figure 1****.** The motion vector selection device 110 receives a target image 115, a set of one or more reference images from a reference pool 120, an initial collection of motion vectors (which may be empty) 125, and a control signal 130 to indicate the allowed bit rate, R_{T}, or the allowed efficiency ΔD / ΔR, , where ΔD is a change in distortion.

An example of distortion, used in some embodiments, is the sum of the square difference between pixels on the compensated image and corresponding pixels on the target image. Another example of distortion is the sum of the absolute difference between corresponding pixels on the target and compensated images.

The ΔR is a change in bit rate. In some embodiments, the bit rate is the average number of bits required to encode each second of video. The target rate is the rate the algorithm seeks to attain. The current rate is the number of bits per second of video required to encode the current selection of motion vectors. Rate variance is the rate added to the target rate, which defines the acceptable bounds of iterating for the current rate.

A candidate motion vector determination device 135 uses shape definition library 140 to select an output collection of motion vectors. This output collection of motion vectors is applied to the reference images so as to form a compensated image 145 that approximates the target image 115 within the allowed parameters set by the control signal 130. The output collection of motion vectors 150 can then be encoded as part of a video compression and transmission process.

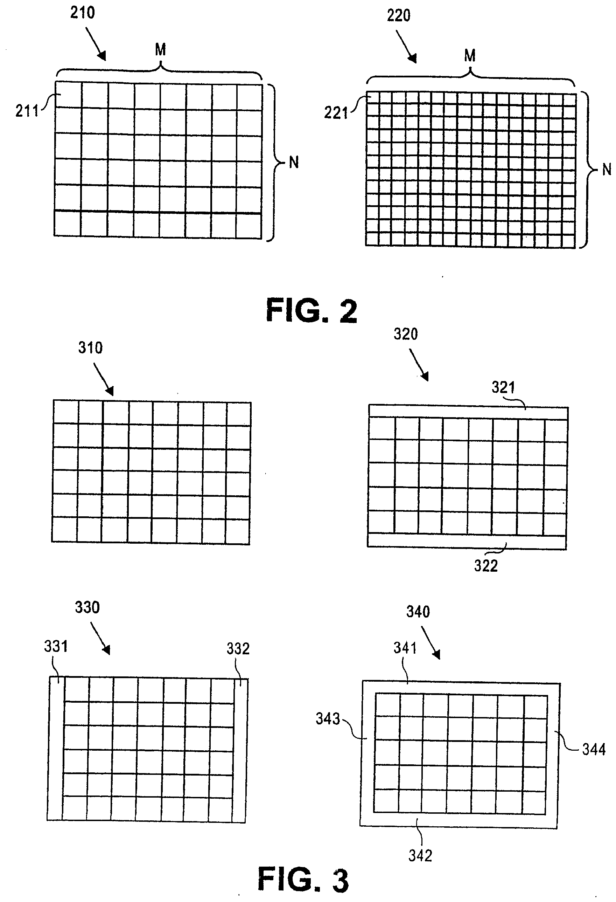

Each shape definition in shape definition library 140 refers to a collection of pixels that are compensated by a motion vector. For example, **Figure** 2 shows two shape definitions for constructing reference blocks. Shape definition 210 tiles a target image of M by N pixels into a collection of nonoverlapping blocks of 16 pixels by 16 pixels. For example, block 211 is a block of 16 x 16 pixels. Each block is represented by a motion vector (not shown). A unique motion vector ID is used to identify a particular block within a shape definition. In this example, the motion vector ID's range from 1 to (M x N)/(16 x 16). As another example, shape definition 220 tiles the target image into blocks of 4 by 4 pixels. For example, block 221 is a block of 4 by 4 pixels. The motion vector ID's for shape definition 220 range from 1 to (M x N)/4 X 4). Also, a unique shape ID is used to identity each shape definition. The unique shape ID and the unique motion vector ID are used to uniquely determine a particular block in the multiple shape definitions. The shapes 210 and 220 are illustrative of shapes commonly used in video coding.

**Figure 3** shows examples of shape definitions which are used together in some embodiments of shape definition library 140. In these examples, the shape definitions are based on block of 16 pixels by 16 pixels. Some shape definitions have an offset to allow for more complex interactions, such as overlapping blocks. Illustrative shape definition 310 tiles a target image of M x N pixels into 16 x 16 pixel blocks, has a shape ID of 1, and has motion vector ID's ranging from 1 to (M x N)/(16 x 16). Shape definition 320 tiles a target image of M x N pixels onto 16 x 16 blocks, with offsets 321 and 322 of 8 pixels vertically, along the upper and lower boundaries of the image. The shape ID of illustrative shape definition 320 is 2, and the motion vector ID's range from 1 to (M-1) x N)/(16 x 16). Illustrative shape definition 330 tiles a target image of M x N pixels into 16 x 16 blocks, with offsets 331 and 332 of 8 pixels horizontally, along the left and right boundaries of the image. The shape ID for shape definition 330 is 3, and the motion vector ID's range from 1 to (M x (N-1)/(16 x 16). Illustrative shape definition 340 tiles a target image of M x N pixels into 16 x 16 blocks with offsets 341, 342 of 8 pixels vertically and offsets 343, 344 of 8 pixels horizontally. The shape ID for shape definition 340 is 4, and the motion vector ID's range from 1 to ((M-1) x (N-1))/(16 x 16). A combination of a shape ID and a motion vector ID are used to uniquely identify a particular block from shape definitions 310, 320, 330, and 340.

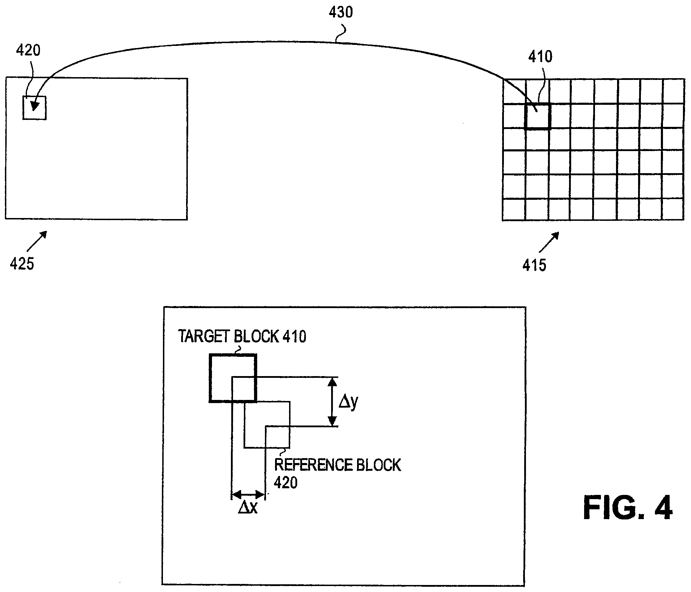

A target block 410 in target image 415 from a shape definition in library 140 (shown in Figure 1) is mapped to a location of a corresponding reference block 420 in a reference image 425 using a motion vector 430 from the output selection of motion vectors, as shown in **Figure 4** for example. The motion vector 430 indicates an amount of motion, represented by vertical and horizontal offsets Δy and Δx, of the reference block 420 relative to the target block 410. In one embodiment, a fully specified motion vector includes a shape ID, motion vector ID, reference image ID, and horizontal and vertical offsets. When determining motion vectors as part of an encoding system, the reference images may either be original input images or their decoded counterparts.

After a reference block is identified by a motion vector, the pixel values from the reference block are copies to the corresponding target block. The compensated target image is thus generated by using the output selection of motion vectors to map target blocks to reference blocks, then copying the pixel values to the target blocks. The compensated image is generally used to approximate the target image. When constructing the compensated image as part of a video decoding system, the reference images are generally images that were previously decoded.

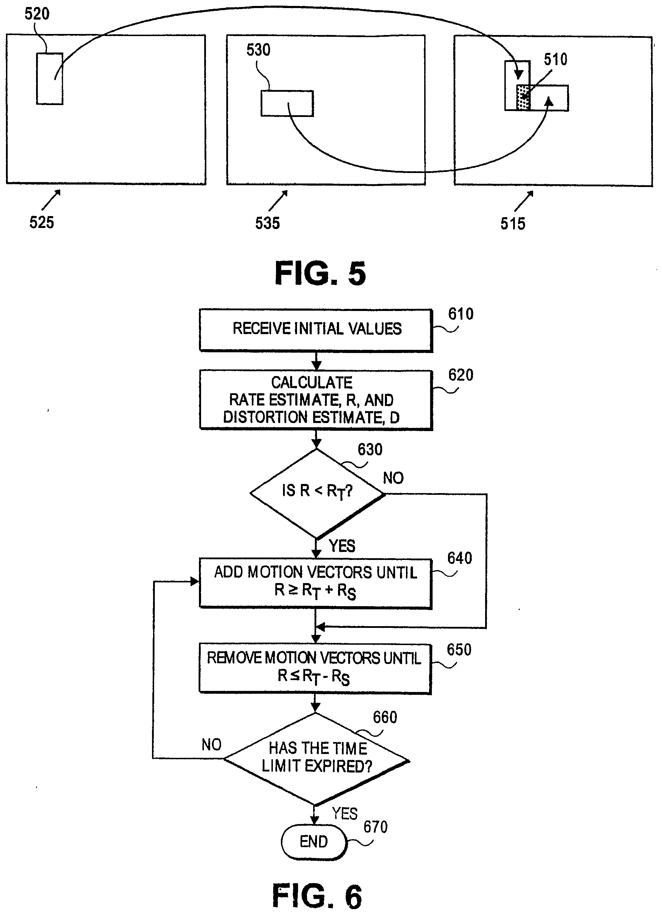

In some cases, some pixels in the target image are part of multiple target blocks, and are mapped to more than one reference block to form an overlapping area of target blocks, as shown in Figure 5. In these cases, the value of each compensated pixel in the overlapping area 510 of compensated image 515 is determined by taking an average of the pixel values from the reference blocks 520 and 530 in reference images 525 and 535, respectively. Alternatively, a weighted average or a filtered estimate can be used. Also, in some cases, some pixels in the target image are not part of a target block and are not mapped to any reference block. These pixels can use a default value (such as 0), and interpolated value, a previously held value, or another specialized rule.

Referring again to **Figure 1****,** motion vector selection device 110 next selects some of the motion vectors from shape definition library 140 and discards some of the motion vectors. The compensated target image 145 is then constructed using the motion vectors in output collection of motion vectors 150, the images that they reference from reference pool 120, and the shape definitions of the blocks from shape definition library 140. Candidate motion vector determination device 135 determines if one or more motion vectors should be added to, or removed from, output collection of motion vectors 150. This determining is performed in accordance with approximately optimal rate-distortion criteria.

An example of a motion vector selection method is shown in **Figure 6****.** At 610, initial values (such as the initial collection of motion vectors), a target rate, a rate variance, the target image, and reference images, are received. An example of rate variance is an amount of rate overshoot and rate undershoot that is added to the target rate. The larger the rate variance, the more changes are made to the collection, but the longer it takes to return to the target rate. A rate estimate R and a distortion estimate D are calculated at 620. At 630, if the rate estimate R is less than the target R_{T}, then at 640 one or more motion vectors are added until the rate R exceeds the target rate R_{T} by an amount R_{S}. In some embodiments, at 640 motion vectors are added until a time limit expires. If at 630 the rate R is not less than the target rate R_{T}, or at 640 exceeds the target rate R_{T} by an amount R_{S}, then at 650 one or more motion vectors are removed until the different between R_{T} and R_{S} is greater than or equal to the rate estimate R. At 650, in some embodiments, motion vector are removed until a time limit has expired. At 660, in some embodiments, the method determines if a time limit has expired. If so, the method ends at 670. Otherwise, the method returns to 640.

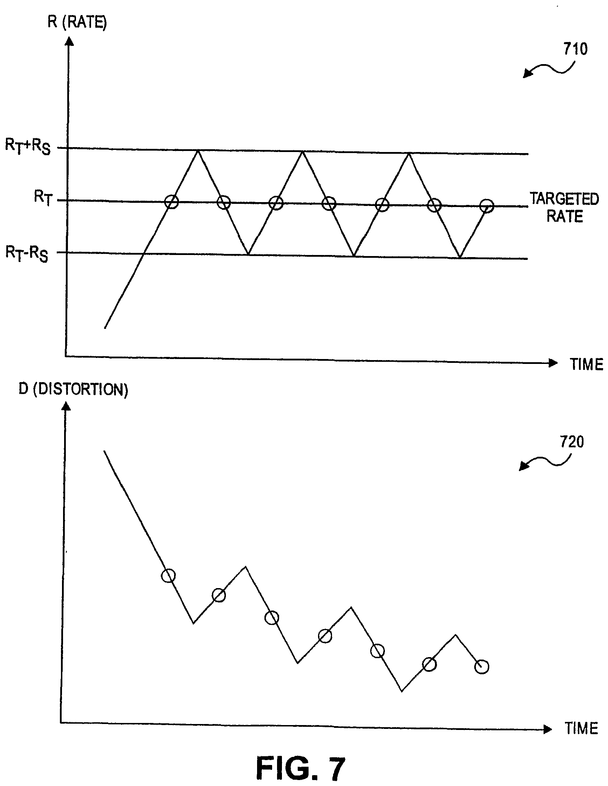

The motion vector selection method shown in **Figure 6** adds or removes motion vectors until the target rate (or in some embodiments, the target efficiency) is reached, as shown in graph 710 of **Figure 7****.** After this vector selection has been accomplished, the current estimated rate oscillates around the target rate finding operating points that yield lower distortion measures as shown in graph 720. The circles in 710 and 720 indicate rate and distortion measures where the targeted rate has been met. The rate of reduction of the distortion eventually saturates, allowing the method to end without significant loss in performance.

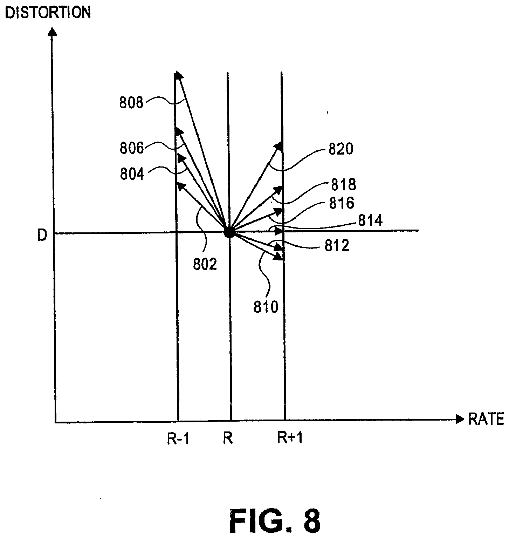

A graph showing examples of the effects of adding or removing a motion vector from the collection of candidate motion vectors is shown in **Figure 8****.** Starting at an operating point with rate estimate R and distortion estimate D, the method has the option to add or remove a motion vector. The rate can be modeled as being directly proportional to the number of motion vectors so that adding a motion vector increases the rate by 1 unit and removing a motion vector decreases the rate by 1 unit. The method selects the addition or deletion action that corresponds to the greatest reduction in distortion. Each arrow in **Figure 8** corresponds to a motion vector and shows the impact of the motion vector on the rate and distortion.

For example, arrows 802, 804, 806, and 808 show the effects of removing one motion vector from the collection 150. Removing the motion vector corresponding to arrow 808 causes the largest increase in image distortion. Removing the motion vector corresponding to arrow 802 causes the smallest increase in distortion. In all four cases, removing a motion vector decreases the rate by 1 unit, and increases the distortion of the compensated image. Removing a motion vector can result in a decrease in distortion, but this result is relatively rare.

Arrows 810, 812, 814, 816, 818, and 820 show the effects of adding one motion vector to the collection 150. In each case, adding a motion vector increases the rate by 1 unit. In some cases, adding a motion vector also increases the distortion. For example, arrow 820 shows that adding the corresponding motion vector to the collection 850 will increase distortion as well as increase the rate. In other cases, adding a motion vector has no effect on distortion, as shown for example by arrow 814. Adding a motion vector to the collection is efficient if the additional motion vector decreases the amount of distortion of the compensated image. Arrows 810 and 812 correspond to motion vectors that decreases the distortion if added to the collection.

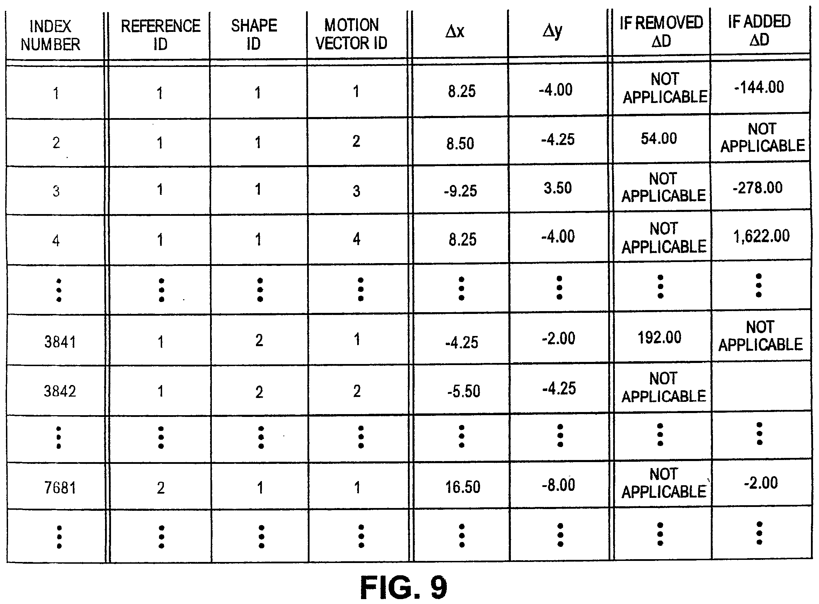

A table showing the effects of adding or removing a motion vector from the collection of motion vectors 150 is shown in **Figure 9****.** In this example, a motion vector that is currently in the collection may be removed, and a motion vector which is not currently in the collection may be added. When seeking to reduce the encoding rate, the motion vector selection method identifies the motion vector which, when removed from the collection, causes the smallest increase in distortion. For example, the method removes the motion vector having the smallest value of ΔD from the "IF REMOVED " column of **Figure 9****.** Similarly, when seeking to increase the encoding rate, the method adds the motion vector that results in the largest decrease in distortion. For example, the method adds the motion vector having the most negative value of ΔD from the "IF ADDED " column.

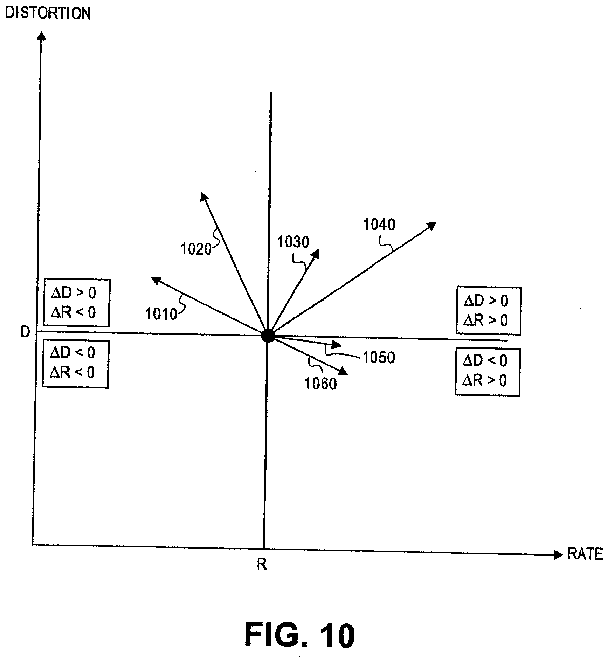

In general the method can consider cases where the rate changes are not restricted to be +/-1. This situation can occur when using a more sophisticated rate-estimation method or when allowing several simultaneous changes to the motion vector selection. In this general case, the effect of applying various candidate decisions moves the operating point from (R,D) as indicated by the arrows shown in **Figure 10****.**

For example, arrow 1010 shows the increase in distortion from removing a motion vector. Arrow 1020 shows a larger increase in distortion from removing a different motion vector. Therefore, if a motion vector is to be removed to decrease the rate, the motion vector corresponding to arrow 1010 is a better choice, because the increase in distortion is minimized. Similarly, arrows 1030, 1040, 1050, and 1060 show the effects of adding a motion vector. The motion vectors corresponding to arrows 1030 and 1040 increase the rate and increase the distortion, and therefore these motion vectors are not added. The motion vectors corresponding to arrows 1050 and 1060 decrease the distortion. Of these, 1060 is the better choice because it results in a greater reduction in the distortion.

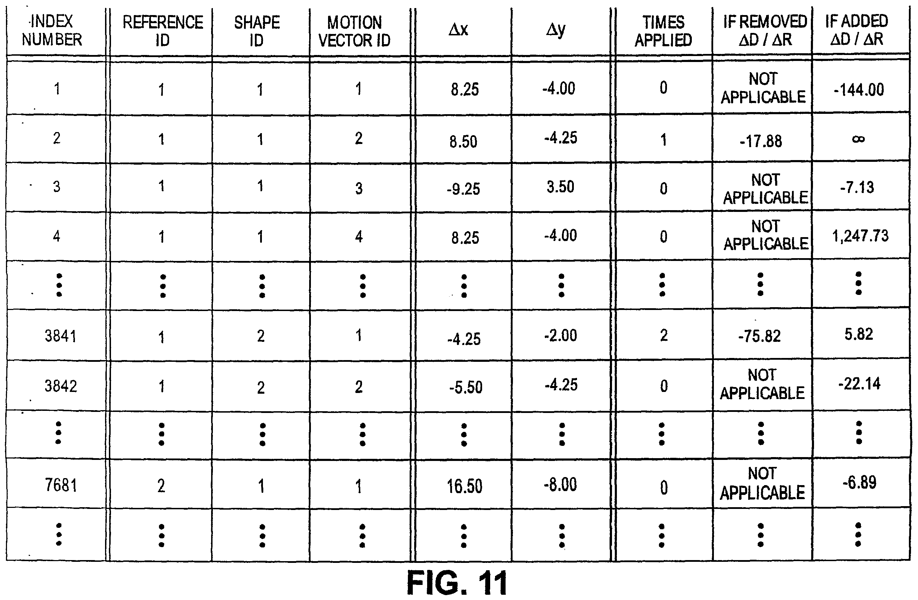

A table for the general case is shown in **Figure 11****.** This table shows two independent changes from the table of **Figure 9****.** First, motion vectors are allowed to be applied more than once, thereby altering the compensated value which is an average of mapped values. Second, if a motion vector is applied multiple times, the rate modeling is more complex than simply counting the motion vectors. Therefore, a "TIMES APPLIED" has been added to the Table. Also, the effect on the efficiency as measured by ΔD / AR of adding or removing a motion vector is considered, rather than the effect on the distortion.

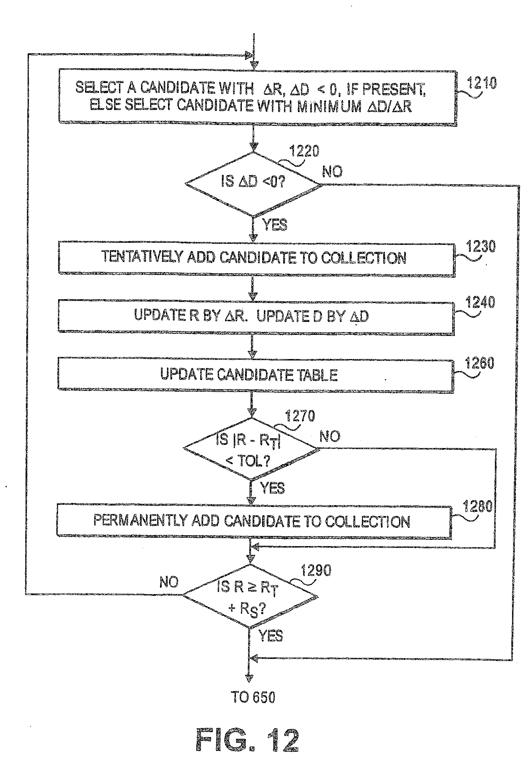

**Figure 12** shows an example of a method for adding a motion vector, as illustrated at 640 of **Figure 6****.** At 1210, a best candidate motion vector is selected as a potential addition to the collection of motion vectors. The best candidate is a motion vector with ΔR, ΔD less than 0 if such a vector is present in the set of candidate motion vectors. Otherwise, the best candidate is the motion vector with a minimum value of ΔD/ΔR. Then, at 1220, the method determines whether adding the best candidate motion vector decreases the distortion of the compensated image. If not, the method ends. If so, at 1230 the best candidate motion vector is tentatively added to the collection 150. At 1240, the values of the rate and distortion are updated. At 1260, the candidate table is updated. Then, at 1270 the method determines if the current estimated rate R is within a tolerable range of the target rate R_{T}. If so, then at 1280 the best candidate motion vector is permanently added to the collection. At 1290, if the rate R exceeds the target rate R_{T} by an amount R_{S}, the method for adding a motion vector ends by returning to block 650 in the motion vector selection method of **Figure 6****.** Otherwise, the method for adding a motion vector returns to 1210.

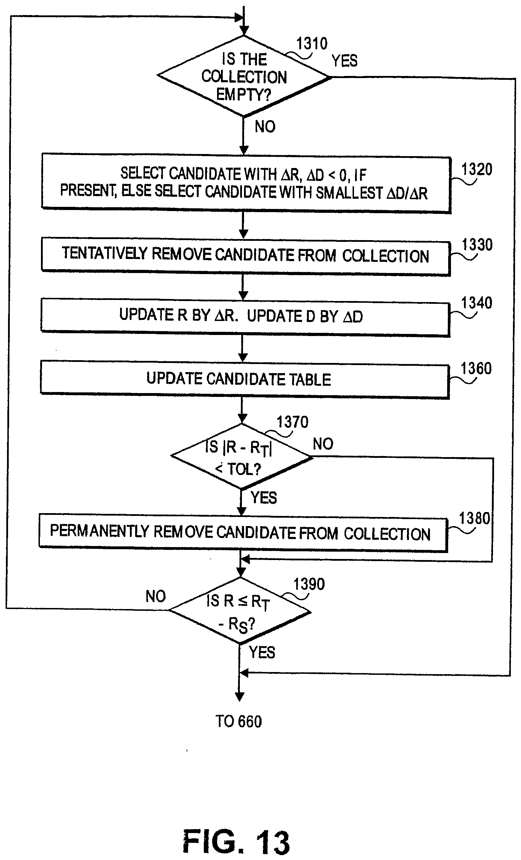

**Figure 13** shows an example of a method from removing a motion vector, as illustrated at 650 of Figure 6. At 1310, the method determines if no motion vectors are in the collection 150 of motion vectors. If no motion vectors are present, the method ends. Otherwise, at 1320, a best candidate motion vector is selected. If a motion vector is present that reduces the distortion if removed from collection 150, such a vector is selected as the best candidate. Otherwise, the motion vector having the smallest ΔD / ΔR is selected as the best candidate for removal. At 1330, the best candidate is tentatively removed from the collection of motion vectors. AT 1340, the values for the rate R and the distortion D are updated. At 1360, the candidate table is updated. Then, at 1370 the method determines if the rate R is within a tolerable range of the target rate R_{T}. If so, then at 1380 the candidate motion vector is permanently removed from the collection 150. At 1390, if the rate R is less than the target rate R_{T} by an amount R_{S}, the method for removing a motion vector ends by returning to block 660 in the motion vector selection method of Figure 6. Otherwise, the method for removing a motion vector returns to 1310.

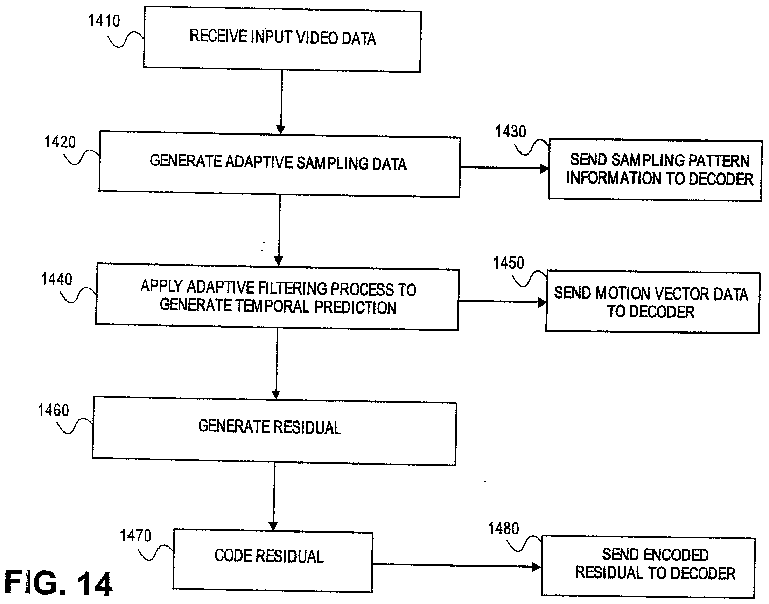

In one embodiment, the motion vector selection method is used in video coding for encoding an image (or frame, or field) of video data, as shown in **Figure 14****.** At 1410, the encoder receives an input target image. A set of reference images, which contain decoded image data related to the target image, is available to the encoder during the encoding process, and also to the decoder during the decoding process. At 1420, the encoder generates an irregular sampling, or distribution, of motion vectors associated with the target image. At 1430, the sampling patters information (e.g., bits to represent the pattern) is transmitted to a decoder. The method shown in **Figure 6** can be used to generate the adaptive sampling pattern.

At 1440, a temporal prediction filtering process is applied to the irregular motion sampling pattern. This adaptive filtering process uses the motion vectors, irregular sampling pattern, and reference images to generate a prediction of the target image. At 1450, the motion vector values are coded and sent to the decoder. At 1460, a residual is generated, which is the actual target data of the target image minus the prediction error from the adaptive filtering process. At 1470, the residual is coded and, at 1480, is sent to the decoder.

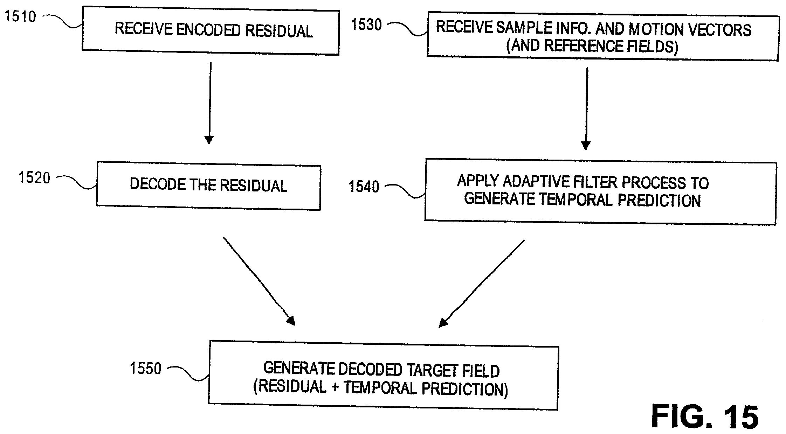

In another embodiment, the adaptive sampling pattern of motion vectors is used in decoding a image (or frame, or image) of video data, as shown in **Figure 15****.** At 1510, an encoded residual is received. At 1520, the decoder decodes the received encoded residual. At 1530, the decoder receives the sample pattern information, reference images, and motion vector values. Then, at 1540 the decoder applies the adaptive temporal filter procedure to generate the temporal prediction. At 1550, the decoded target image is generated by adding the decoded residual to the temporal prediction.

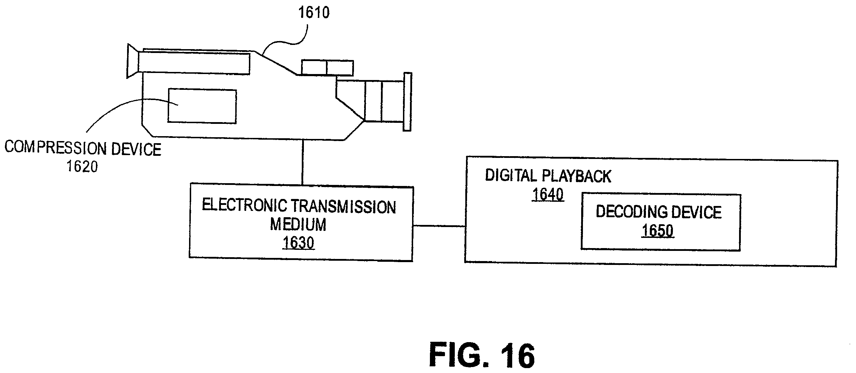

**Figure 16** shows an example of a system that uses the adaptive area of influence filter. A digital video camera 1610 captures images in an electronic form, and processes the images using compression device 1620, which uses the motion vector selection method during the compression and encoding process. The encoded images are sent over an electronic transmission medium 1630 to digital playback device 1640. The images are decoded by decoding device 1650, which uses the filter during the decoding process. Camera 1610 is illustrative of various image processing apparatuses (e.g., other image capture devices, image editors, image processors, personal and commercial computing platforms, etc.) that include embodiments of the invention. Likewise, decoding device 1650 is illustrative of various devices that decode image data.

## Claims

1. A method of selecting motion vectors in a video compression encoder, comprising:
receiving a target image, a reference image, a target bit rate and a bit rate variance (610; 115, 125, 130);
determining a collection of candidate motion vectors by dividing the target image into blocks by using a library of shape definitions, each shape definition defining tiling of a target image into a collection of blocks of pixels with each block being represented by a motion vector for compensating its pixels;
selecting an output collection of motion vectors based on the collection of candidate motion vectors;
and
forming a compensated image using the output collection of motion vectors to generate a compensated target image by mapping target blocks of the target image to reference blocks in the reference image according to each motion vector of the output collection of motion vectors and copying the pixel values of the reference blocks to the target blocks; wherein the selecting the output collection of motion vectors comprises
identifying each of the reference blocks in the reference image corresponding to the target blocks in the target image using each of the candidate motion vectors;
for each of the candidate motion vectors calculating an amount of image distortion (620) between the target image and the compensated target image generated from the identified reference blocks and target blocks; and
adding one or more of the candidate motion vectors to the output collection of motion vectors in accordance with a rate-distortion criterion to cause the largest decrease in image distortion, or
removing one or more of the motion vectors from the output collection of motion vectors to cause the smallest increase in image distortion until a stopping criterion is reached, and the adding or removing the one or more candidate motion vectors including
if a resulting bit rate of the compensated target image is less than the target bit rate, adding one or more of the candidate motion vectors from the collection of candidate motion vectors to the output collection of motion vectors until the bit rate is greater than or equal to the target bit rate plus the bit rate variance;
if the resulting bit rate of the compensated target image is greater than the target bit rate, removing one or more of the motion vectors from the output collection of motion vectors until the resulting bit rate is less than or equal to the target bit rate minus the bit rate variance.

2. The method of claim 1, wherein the removing the one or more of the motion vectors from the output collection comprises:
for each motion vector in the output collection, determining a change in the image distortion that results from removing the motion vector from the output collection, determining a change in bit rate that results from the removing the motion vector from the output collection, and determining a ratio between the change in image distortion in the compensated target image and the change in the resulting bit rate; and
removing the motion vector if the removal causes a minimum change in the ratio.

3. The method of claim 1, wherein the adding the one or more of the candidate motion vectors comprises:
for each of the candidate motion vectors in the collection of candidate motion vectors, determining a change in the image distortion of the compensated target image that results from adding the candidate motion vector to the output collection, determining a change in the resulting data rate of the compensated target image that results from adding the candidate motion vector to the output collection, and determining a ratio between the change in image distortion of the compensated target image and the change in the resulting bit rate; and
adding the candidate motion vector whose addition causes a minimum change in the ratio.

4. An apparatus for video compression encoding, the apparatus comprising:
a motion vector selection device (110) that receives a target image, a reference image, a target bit rate and a bit rate variance; and
a candidate motion vector determination device (135) that:
determines a collection of candidate motion vectors by dividing the target image into blocks using a library of shape definitions, each shape definition defining tiling of a target image into a collection of blocks of pixels with each block being represented by a motion vector for compensating its pixels;
selects an output collection of motion vectors based on the collection of candidate motion vectors; and
forms a compensated image using the output collection of motion vectors to generate a compensated target image by mapping target blocks of the target image to reference blocks in the reference image according to each motion vector of the output collection of motion vectors and copying the pixel values of the reference blocks to the target blocks; wherein the selecting the output collection of motion vectors comprises
identifying each of the reference blocks in the reference image corresponding to the target blocks in the target image using each of the candidate motion vectors;
for each of the candidate motion vectors calculating an amount of image distortion (620) between the target image and the compensated target image generated from the identified reference blocks and target blocks; and
adding one or more of the candidate motion vectors to the output collection of motion vectors in accordance with a rate-distortion criterion to cause the largest decrease in image distortion, or
removing one or more of the motion vectors from the output collection of motion vectors to cause the smallest increase in image distortion until a stopping criterion is reached, and the adding or removing the one or more candidate motion vectors including
if a resulting bit rate of the compensated target image is less than the target bit rate, adding one or more of the candidate motion vectors from the collection of candidate motion vectors to the output collection of motion vectors until the bit rate is greater than or equal to the target bit rate plus the bit rate variance;
if the resulting bit rate of the compensated target image is greater than the target bit rate, removing one or more of the motion vectors from the output collection of motion vectors until the resulting bit rate is less than or equal to the target bit rate minus the bit rate variance.

5. The apparatus of claim 4, wherein the removing the one or more of the motion vectors from the output collection comprises:
for each motion vector in the output collection, determining a change in the image distortion that results from removing the motion vector from the output collection, determining a change in bit rate that results from the removing the motion vector from the output collection, and determining a ratio between the change in image distortion in the compensated target image and the change in the resulting bit rate; and
removing the motion vector from the output collection if the removal causes a minimum change in the ratio.

6. The apparatus of claim 4, wherein the adding the one or more of the candidate motion vectors comprises:
for each of the candidate motion vectors in the collection of candidate motion vectors, determining a change in the image distortion of the compensated target image that results from adding the candidate motion vector to the output collection, determining a change in the resulting bit rate of the compensated target image that results from adding the candidate motion vector to the output collection, and determining a ratio between the change in image distortion of the compensated target image and the change in the resulting bit rate; and
adding the candidate motion vector whose addition causes a minimum change in the ratio.

7. A computer readable medium storing a computer program of instructions which, when executed by a processing system, cause the system to perform a method according to any of claims 1, 2 or 3.

## Patentansprüche

1. Verfahren zum Auswählen von Bewegungsvektoren in einem Videokomprimierungscodierer, umfassend:
Empfangen eines Zielbilds, eines Referenzbilds, einer Zielbitrate und einer Bitratenvarianz (610; 115, 125, 130);
Bestimmen einer Sammlung von Bewegungsvektorkandidaten durch Aufteilen des Zielbilds in Blöcke unter Verwendung einer Bibliothek von Formdefinitionen, wobei jede Formdefinition eine Parkettierung eines Zielbilds in eine Sammlung von Pixelblöcken definiert, wobei jeder Block durch einen Bewegungsvektor zur Kompensation von dessen Pixeln repräsentiert wird; Auswählen einer Ausgangssammlung von Bewegungsvektoren auf Grundlage der Sammlung von Bewegungsvektorkandidaten;
und
Ausbilden eines kompensierten Bilds unter Verwendung der Ausgangssammlung von Bewegungsvektoren, um ein kompensiertes Zielbild zu erzeugen, durch Abbilden von Zielblöcken des Zielbilds auf Referenzblöcke in dem Referenzbild gemäß jedem Bewegungsvektor der Ausgangssammlung von Bewegungsvektoren und Kopieren der Pixelwerte der Referenzblöcke in die Zielblöcke; wobei das Auswählen der Ausgangssammlung von Bewegungsvektoren Folgendes umfasst:
Identifizieren von jedem der Referenzblöcke in dem Referenzbild, die den Zielblöcken in dem Zielbild entsprechen, unter Verwendung von jedem der Bewegungsvektorkandidaten;
für jeden der Bewegungsvektorkandidaten, Berechnen einer Stärke einer Bildverzerrung (620) zwischen dem Zielbild und dem aus den identifizierten Blöcken und den Zielblöcken erzeugten kompensierten Zielbild; und
Hinzufügen eines oder mehrerer der Bewegungsvektorkandidaten zu der Ausgangssammlung von Bewegungsvektoren gemäß einem Rate-Verzerrung-Kriterium, um die größte Abnahme an Bildverzerrung zu bewirken, oder
Entfernen eines oder mehrerer der Bewegungsvektoren aus der Ausgangssammlung von Bewegungsvektoren, um die kleinste Zunahme an Bildverzerrung zu bewirken, bis ein Stoppkriterium erreicht wird, und das Hinzufügen oder Entfernen des einen oder der mehreren Bewegungsvektorkandidaten Folgendes beinhaltet:
falls eine Bitrate des kompensierten Zielbilds kleiner als die Zielbitrate ist, Hinzufügen eines oder mehrerer der Bewegungsvektorkandidaten aus der Sammlung von Bewegungsvektorkandidaten zu der Ausgangssammlung von Bewegungsvektoren bis die Bitrate größer oder gleich der Zielbitrate plus der Bitratenvarianz ist;
falls die resultierende Bitrate des kompensierten Zielbilds größer als die Zielbitrate ist, Entfernen eines oder mehrerer der Bewegungsvektoren aus der Ausgangssammlung von Bewegungsvektoren bis die resultierende Bitrate kleiner oder gleich der Zielbitrate minus der Bitratenvarianz ist.

2. Verfahren nach Anspruch 1, wobei das Entfernen des einen oder der mehreren Bewegungsvektoren aus der Ausgangssammlung Folgendes umfasst:
für jeden Bewegungsvektor in der Ausgangssammlung, Bestimmen einer Änderung der Bildverzerrung, die aus dem Entfernen des Bewegungsvektors aus der Ausgangssammlung resultiert,
Bestimmen einer Änderung der Bitrate, die aus dem Entfernen des Bewegungsvektors aus der Ausgangssammlung resultiert, und Bestimmen eines Verhältnisses zwischen der Änderung der Bildverzerrung in dem kompensierten Zielbild und der Änderung der resultierenden Bitrate; und
Entfernen des Bewegungsvektors, falls das Entfernen eine minimale Änderung des Verhältnisses bewirkt.

3. Verfahren nach Anspruch 1, wobei das Hinzufügen des einen oder der mehreren Bewegungsvektorkandidaten Folgendes umfasst:
für jeden Bewegungsvektorkandidaten in der Sammlung von Bewegungsvektorkandidaten, Bestimmen einer Änderung der Bildverzerrung des kompensierten Zielbilds, die aus dem Hinzufügen des Bewegungsvektorkandidaten zu der Ausgangssammlung resultiert, Bestimmen einer Änderung der resultierenden Datenrate des kompensierten Zielbilds, die aus dem Hinzufügen des Bewegungsvektorkandidaten zu der Ausgangssammlung resultiert, und Bestimmen eines Verhältnisses zwischen der Änderung der Bildverzerrung in dem kompensierten Zielbild und der Änderung der resultierenden Bitrate; und
Hinzufügen des Bewegungsvektorkandidaten, dessen Hinzufügen eine minimale Änderung des Verhältnisses bewirkt.

4. Einrichtung zum Videokomprimierungscodieren, wobei die Einrichtung Folgendes umfasst:
eine Bewegungsvektorauswahlvorrichtung (110), die ein Zielbild, ein Referenzbild, eine Zielbitrate und eine Bitratenvarianz empfängt; und
eine Bewegungsvektorkandidat-Bestimmungsvorrichtung (135), die Folgendes vornimmt:
Bestimmen einer Sammlung von Bewegungsvektorkandidaten durch Aufteilen des Zielbilds in Blöcke unter Verwendung einer Bibliothek von Formdefinitionen, wobei jede Formdefinition eine Parkettierung eines Zielbilds in eine Sammlung von Pixelblöcken definiert, wobei jeder Block durch einen Bewegungsvektor zur Kompensation von dessen Pixeln repräsentiert wird;
Auswählen einer Ausgangssammlung von Bewegungsvektoren auf Grundlage der Sammlung von Bewegungsvektorkandidaten; und
Ausbilden eines kompensierten Bilds unter Verwendung der Ausgangssammlung von Bewegungsvektoren, um ein kompensiertes Zielbild zu erzeugen, durch Abbilden von Zielblöcken des Zielbilds auf Referenzblöcke in dem Referenzbild gemäß jedem Bewegungsvektor der Ausgangssammlung von Bewegungsvektoren und Kopieren der Pixelwerte der Referenzblöcke in die Zielblöcke; wobei das Auswählen der Ausgangssammlung von Bewegungsvektoren Folgendes umfasst:
Identifizieren von jedem der Referenzblöcke in dem Referenzbild, die den Zielblöcken in dem Zielbild entsprechen, unter Verwendung von jedem der Bewegungsvektorkandidaten;
für jeden der Bewegungsvektorkandidaten, Berechnen einer Stärke einer Bildverzerrung (620) zwischen dem Zielbild und dem aus den identifizierten Blöcken und den Zielblöcken erzeugten kompensierten Zielbild; und
Hinzufügen eines oder mehrerer der Bewegungsvektorkandidaten zu der Ausgangssammlung von Bewegungsvektoren gemäß einem Rate-Verzerrung-Kriterium, um die größte Abnahme an Bildverzerrung zu bewirken, oder
Entfernen eines oder mehrerer der Bewegungsvektoren aus der Ausgangssammlung von Bewegungsvektoren, um die kleinste Zunahme an Bildverzerrung zu bewirken, bis ein Stoppkriterium erreicht wird, und das Hinzufügen oder Entfernen des einen oder der mehreren Bewegungsvektorkandidaten Folgendes beinhaltet:
falls eine Bitrate des kompensierten Zielbilds kleiner als die Zielbitrate ist, Hinzufügen eines oder mehrerer der Bewegungsvektorkandidaten aus der Sammlung von Bewegungsvektorkandidaten zu der Ausgangssammlung von Bewegungsvektoren bis die Bitrate größer oder gleich der Zielbitrate plus der Bitratenvarianz ist;
falls die resultierende Bitrate des kompensierten Zielbilds größer als die Zielbitrate ist, Entfernen eines oder mehrerer der Bewegungsvektoren aus der Ausgangssammlung von Bewegungsvektoren bis die resultierende Bitrate kleiner oder gleich der Zielbitrate minus der Bitratenvarianz ist.

5. Einrichtung nach Anspruch 4, wobei das Entfernen des einen oder der mehreren Bewegungsvektoren aus der Ausgangssammlung Folgendes umfasst:
für jeden Bewegungsvektor in der Ausgangssammlung, Bestimmen einer Änderung der Bildverzerrung, die aus dem Entfernen des Bewegungsvektors aus der Ausgangssammlung resultiert, Bestimmen einer Änderung der Bitrate, die aus dem Entfernen des Bewegungsvektors aus der Ausgangssammlung resultiert, und Bestimmen eines Verhältnisses zwischen der Änderung der Bildverzerrung in dem kompensierten Zielbild und der Änderung der resultierenden Bitrate; und
Entfernen des Bewegungsvektors, falls das Entfernen eine minimale Änderung des Verhältnisses bewirkt.

6. Einrichtung nach Anspruch 4, wobei das Hinzufügen des einen oder der mehreren Bewegungsvektorkandidaten Folgendes umfasst:
für jeden Bewegungsvektorkandidaten in der Sammlung von Bewegungsvektorkandidaten, Bestimmen einer Änderung der Bildverzerrung des kompensierten Zielbilds, die aus dem Hinzufügen des Bewegungsvektorkandidaten zu der Ausgangssammlung resultiert, Bestimmen einer Änderung der resultierenden Bitrate des kompensierten Zielbilds, die aus dem Hinzufügen des Bewegungsvektorkandidaten zu der Ausgangssammlung resultiert, und Bestimmen eines Verhältnisses zwischen der Änderung der Bildverzerrung in dem kompensierten Zielbild und der Änderung der resultierenden Bitrate; und
Hinzufügen des Bewegungsvektorkandidaten, dessen Hinzufügen eine minimale Änderung des Verhältnisses bewirkt.

7. Computerlesbares Medium, das ein Computerprogramm von Anweisungen speichert, welche, wenn sie durch ein Verarbeitungssystem ausgeführt werden, das System veranlassen, ein Verfahren nach einem der Ansprüche 1, 2 oder 3 durchzuführen.

## Revendications

1. Procédé de sélection de vecteurs de mouvement dans un codeur de compression vidéo, comprenant :
la réception d'une image cible, d'une image de référence, d'un débit binaire cible et d'une variance de débit binaire (610 ; 115, 125, 130) ;
la détermination d'une collection de vecteurs de mouvement candidats en divisant l'image cible en blocs au moyen d'une bibliothèque de définitions de forme, chaque définition de forme définissant un pavage d'une image cible en une collection de blocs de pixels, chaque bloc étant représenté par un vecteur de mouvement pour compenser ses pixels ;
la sélection d'une collection de sortie de vecteurs de mouvement sur la base de la collection de vecteurs de mouvement candidats ; et
la formation d'une image compensée à l'aide de la collection de sortie de vecteurs de mouvement pour générer une image cible compensée par la mise en correspondance de blocs cibles de l'image cible avec des blocs de référence dans l'image de référence en fonction de chaque vecteur de mouvement de la collection de sortie de vecteurs de mouvement, et la copie des valeurs de pixel des blocs de référence vers les blocs cibles ; la sélection de la collection de sorties de vecteurs de mouvement comprenant :
l'identification de chacun des blocs de référence dans l'image de référence correspondant aux blocs cibles dans l'image cible à l'aide de chacun des vecteurs de mouvement candidats ;
pour chacun des vecteurs de mouvement candidats, le calcul d'une quantité de distorsion d'image (620) entre l'image cible et l'image cible compensée générée à partir des blocs de référence identifiés et des blocs cibles ; et
l'ajout d'un ou plusieurs des vecteurs de mouvement candidats à la collection de sortie de vecteurs de mouvement en fonction d'un critère de distorsion de débit provoquant la plus grande diminution de la distorsion d'image, ou
l'élimination d'un ou plusieurs des vecteurs de mouvement de la collection de sortie de vecteurs de mouvement provoquant la plus petite augmentation de la distorsion d'image jusqu'à ce qu'un critère d'arrêt soit atteint, et l'ajout ou l'élimination du ou des vecteurs de mouvement candidats comprenant, si un débit binaire résultant de l'image cible compensée est inférieur au débit binaire cible, l'ajout d'un ou plusieurs des vecteurs de mouvement candidats à partir de la collection de vecteurs de mouvement candidats à la collection de sortie de vecteurs de mouvement jusqu'à ce que le débit binaire soit supérieur ou égal au débit binaire cible plus la variance de débit binaire ;
si le débit binaire résultant de l'image cible compensée est supérieur au débit binaire cible, l'élimination d'un ou plusieurs des vecteurs de mouvement de la collection de sortie de vecteurs de mouvement jusqu'à ce que le débit binaire résultant soit inférieur ou égal au débit binaire cible moins la variance de débit binaire.

2. Procédé selon la revendication 1, l'élimination d'un ou plusieurs des vecteurs de mouvement d'une collection de sortie comprenant :
pour chaque vecteur de mouvement dans la collection de sortie, la détermination d'un changement de la distorsion d'image qui résulte de l'élimination du vecteur de mouvement de la collection de sortie, la détermination d'un changement de débit binaire qui résulte de l'élimination du vecteur de mouvement à partir de la collection de sortie, et
la détermination d'un rapport entre le changement de distorsion d'image dans l'image cible compensée et le changement du débit binaire résultant ; et
l'élimination du vecteur de mouvement si l'élimination provoque un changement minimal dans le rapport.

3. Procédé selon la revendication 1, l'ajout du ou des vecteurs de mouvement candidats comprenant :
pour chacun des vecteurs de mouvement candidats dans la collection de vecteurs de mouvement candidats, la détermination d'un changement de la distorsion d'image de l'image cible compensée qui résulte de l'ajout du vecteur de mouvement candidat à la collection de sortie,
la détermination d'un changement du débit de données résultant de l'image cible compensée qui résulte de l'ajout du vecteur de mouvement candidat à la collection de sortie, et
la détermination d'un rapport entre le changement de distorsion d'image de l'image cible compensée et le changement dans le débit binaire résultant ; et
l'ajout du vecteur de mouvement candidat dont l'ajout provoque un changement minimal dans le rapport.

4. Appareil de codage par compression vidéo, l'appareil comprenant :
un dispositif de sélection de vecteur de mouvement (110) qui reçoit une image cible, une image de référence, un débit binaire cible et une variance de débit binaire ; et
un dispositif de détermination de vecteur de mouvement candidat (135) qui :
détermine une collection de vecteurs de mouvement candidats en divisant l'image cible en blocs à l'aide d'une bibliothèque de définitions de forme, chaque définition de forme définissant un pavage d'une image cible en une collection de blocs de pixels, chaque bloc étant représenté par un vecteur de mouvement pour compenser ses pixels ;
sélectionne une collection de sortie de vecteurs de mouvement sur la base de la collection de vecteurs de mouvement candidats ; et
forme une image compensée à l'aide de la collection de sortie de vecteurs de mouvement pour générer une image cible compensée par mise en correspondance de blocs cibles de l'image cible avec des blocs de référence dans l'image de référence en fonction de chaque vecteur de mouvement de la collection de sortie de vecteurs de mouvement, et copie les valeurs de pixel des blocs de référence vers les blocs cibles ; la sélection de la collection de sorties de vecteurs de mouvement comprenant :
l'identification de chacun des blocs de référence dans l'image de référence correspondant aux blocs cibles dans l'image cible à l'aide de chacun des vecteurs de mouvement candidats ;
pour chacun des vecteurs de mouvement candidats, le calcul d'une quantité de distorsion d'image (620) entre l'image cible et l'image cible compensée générée à partir des blocs de référence identifiés et des blocs cibles ; et
l'ajout d'un ou plusieurs des vecteurs de mouvement candidats à la collection de sortie de vecteurs de mouvement en fonction d'un critère de distorsion de débit provoquant la plus grande diminution de la distorsion d'image, ou
l'élimination d'un ou plusieurs des vecteurs de mouvement de la collection de sortie de vecteurs de mouvement provoquant la plus petite augmentation de la distorsion d'image jusqu'à ce qu'un critère d'arrêt soit atteint, et l'ajout ou l'élimination du ou des vecteurs de mouvement candidats comprenant :
si un débit binaire résultant de l'image cible compensée est inférieur au débit binaire cible, l'ajout d'un ou plusieurs des vecteurs de mouvement candidats à partir de la collection de vecteurs de mouvement candidats à la collection de sortie de vecteurs de mouvement jusqu'à ce que le débit binaire soit supérieur ou égal au débit binaire cible plus la variance de débit binaire ;
si le débit binaire résultant de l'image cible compensée est supérieur au débit binaire cible, l'élimination d'un ou plusieurs des vecteurs de mouvement de la collection de sortie de vecteurs de mouvement jusqu'à ce que le débit binaire résultant soit inférieur ou égal au débit binaire cible moins la variance de débit binaire.

5. Appareil selon la revendication 4, l'élimination du ou des vecteurs de mouvement à partir de la collection de sortie comprenant :
pour chaque vecteur de mouvement dans la collection de sortie, la détermination d'un changement de la distorsion d'image qui résulte de l'élimination du vecteur de mouvement de la collection de sortie, la détermination d'un changement de débit binaire qui résulte de l'élimination du vecteur de mouvement de la collection de sortie, et la détermination d'un rapport entre le changement de distorsion d'image dans l'image cible compensée et le changement dans le débit binaire résultant ; et
l'élimination du vecteur de mouvement de la collection de sortie si l'élimination provoque un changement minimal dans le rapport.

6. Appareil selon la revendication 4, l'ajout du ou des vecteurs de mouvement candidats comprenant :
pour chacun des vecteurs de mouvement candidats dans la collection de vecteurs de mouvement candidats, la détermination d'un changement de la distorsion d'image de l'image cible compensée qui résulte de l'ajout du vecteur de mouvement candidat à la collection de sortie, la détermination d'un changement du débit binaire résultant de l'image cible compensée qui résulte de l'ajout du vecteur de mouvement candidat à la collection de sortie, et la détermination d'un rapport entre le changement de distorsion d'image de l'image cible compensée et le changement dans le débit binaire résultant ; et
l'ajout du vecteur de mouvement candidat dont l'ajout provoque un changement minimal dans le rapport.

7. Support lisible par ordinateur stockant un programme informatique d'instructions qui, lorsqu'elles sont exécutées par un système de traitement, amènent le système à réaliser un procédé selon l'une quelconque des revendications 1, 2 ou 3.
